Europäisches Patentamt

European Patent Office

Office européen des brevets

(11) Veröffentlichungsnummer: **0 308 733 B1**

(19)

(12) **EUROPÄISCHE PATENTSCHRIFT**

(45) Veröffentlichungstag der Patentschrift: **29.01.92**

(21) Anmeldenummer: **88114654.2**

(22) Anmeldetag: **08.09.88**

(51) Int. Cl.⁵: **C08G 18/76**, C08J 9/02, C08K 5/49

Die Akte enthält technische Angaben, die nach
dem Eingang der Anmeldung eingereicht wurden
und die nicht in dieser Patentschrift enthalten sind.

(54) Verfahren zur Herstellung von Polyurethan-Hartschaumstoffen.

(30) Priorität: **15.09.87 DE 3730872**

(43) Veröffentlichungstag der Anmeldung:
**29.03.89 Patentblatt 89/13**

(45) Bekanntmachung des Hinweises auf die
Patenterteilung:
**29.01.92 Patentblatt 92/05**

(84) Benannte Vertragsstaaten:
**AT BE CH DE LI NL**

(56) Entgegenhaltungen:
**EP-A- 0 108 713**
**EP-A- 0 151 401**
**GB-A- 1 094 717**
**GB-A- 1 158 544**
**GB-A- 2 041 953**

(73) Patentinhaber: **BAYER AG**

**W-5090 Leverkusen 1 Bayerwerk(DE)**

(72) Erfinder: **Adam, Norbert, Dr.**
**Semmelweisstrasse 79**
**W-5000 Köln 80(DE)**
Erfinder: **Dietrich, Werner, Dr.**
**Am Thelen Siefen 8**
**W-5058 Odenthal-Osenau(DE)**
Erfinder: **Giersig, Manfred, Dr.**
**Bruchhauser Strasse 99**
**W-5090 Leverkusen 3(DE)**
Erfinder: **Kaufung, Reinhard, Dr.**
**Heymannstrasse 34**
**W-5090 Leverkusen 1(DE)**
Erfinder: **Wiedermann, Rolf, Dr.**
**Wiesenstrasse 18**
**W-5068 Odenthal(DE)**

EP 0 308 733 B1

**Beschreibung**

Die Verwendung von halogenhaltigen Verbindungen bei der PUR-Schaumstoffherstellung wird gegenwärtig als ökologisch problematisch diskutiert. Dies gilt insbesondere für die Verwendung von perhalogenierten Fluor-Chlor-Kohlenwasserstoffen als Treibmittel, die nach einer ungesicherten Hypothese zu einem Abbau der Ozonschicht führen sollen, aber auch für die Verwendung von halogenhaltigen Flammschutzmitteln, die im Brandfall halogenhaltige Dioxine und Benzofurane abgeben können.

Aufgabe war es daher, ein Verfahren zur Herstellung von PUR-Hartschaumstoffen aufzufinden, das diese Probleme nicht aufweist, wobei andererseits der erhaltene Schaumstoff aber gute Dämmstoffeigenschaften und die für Baustoffanwendungen geforderten Flammschutzeigenschaften besitzt.

Ziel sollte es sein, nach Möglichkeit die bisher üblichen Isocyanate, Polyole und Flammschutzmittel einzusetzen, damit die bisherigen Verarbeitungsmaschinen genutzt werden können.

Da die Fluor-Chlor-Kohlenwasserstoffe nicht nur als Treibmittel wirken, sondern auch die Viskosität der Polyolmischung senken, führt gerade der Verzicht von Fluor-Chlor-Kohlenwasserstoffen in den Formulierung zu Problemen, da eine Verarbeitung der Polyole allein auf herkömmlichen Maschinen zu Schwierigkeiten führt, weil bei hohen Viskositäten die Vermischung schlecht wird.

Der an sich naheliegende Gedanke, die Viskosität der Polyole durch halogenfreie Phosphorverbindungen, wie Triphenyl- oder Diphenylkresylphosphat zu senken, ist problematisch, da solche Produkte Weichmachereigenschaften haben und in üblichen Schaumstofformulierungen zu Schrumpferscheinungen führen.

Ebenfalls zum Schrumpf führten die Versuche mit herkömmlichem, rohem Diphenylmethandiisocyanat, bei dem die Summe der Anteile an 4,4$'$-, 2,4$'$- und 2,2$'$-Diphenylmethandiisocyanat (= Summe 2-Kern-Anteile) z.B. 55 % beträgt.

Es war daher überraschend, daß Schaumstoffe, die mit größeren Mengen an Wasser getrieben werden, trotz Anwesenheit großer Mengen an nicht einbaufähigen Phosphorverbindungen keinen Schrumpf aufweisen, wenn als Isocyanatkomponente ein rohes Diphenylmethandiisocyanat mit höchstens 49 Gew.-% 2-Kern-Anteil, das also überwiegend aus höherfunktionellen Homologen besteht, verwendet wird.

Es war weiterhin überraschend, daß Schaumstoffe, die mit Wasser getrieben werden, bei einer Rohdichte von 32 kg/m$^3$ geschlossenzellig sind. Hierdurch wird ein niedriger Wert für die Wärmeleitfähigkeit erhalten.

Aus der GB-A 1 158 544 sind zwar schon ähnliche PU-Hartschaumrezepturen unter Verwendung von Roh-MDI mit einem 2-Kernanteil zwischen 30 und 95 % und von 1 bis 10 % Wasser als Treibmittel bekannt geworden, und von der EP-A 151 401 unterscheidet sich die Erfindung durch die höhere Wassermenge. Es hat sich aber überraschenderweise herausgestellt, daß erst die erfindungsgemäße Merkmalskombination zu dem technisch deutlich verbesserten Ergebnis führt.

Gegenstand der Erfindung ist somit ein Verfahren zur Herstellung von Polyurethan-Hartschaumstoffen durch Umsetzung von Polyisocyanaten mit mindestens zwei gegenüber Isocyanaten aktive Wasserstoffatome aufweisenden Verbindungen vom Molekulargewicht 350 bis 4.000 in Gegenwart von Treibmitteln und in Gegenwart von organischen, nichteinbaubaren phosphorhaltigen Zusatzstoffen, gegebenenfalls in Gegenwart von Katalysatoren, von Verbindungen mit mindestens zwei gegenüber Isocyanaten reaktionsfähigen Wasserstoffatomen und einem Molekulargewicht von 32 bis 349 sowie an sich bekannten oberflächenaktiven und flammhemmenden Zusatzstoffen und weiteren, an sich bekannten Hilfsmitteln, dadurch gekennzeichnet, daß als

a) Polyisocyanate Gemische aus 5 bis 49 Gew.-% an Diphenylmethandiisocyanaten und 95 bis 51 Gew.-% an Polyphenyl-polymethylen-polyisocyanaten, als

b) Treibmittel Wasser in einer Menge von 2 bis 5 Gew.-Teilen, bevorzugt 2,5 bis 4,5 Gew.-Teilen, bezogen auf 100 Gew.-Teile der mindestens zwei aktive Wasserstoffatome aufweisenden Verbindungen vom Molekulargewicht 350 bis 4000 ("Polyolkomponente"), und als

c) organische, nichteinbaubare phosphorhaltige Zusatzstoffe halogenfreie Phosphorverbindungen verwendet werden.

Bevorzugt werden anorganische Flammschutzmittel mitverwendet.

Erfindungsgemäß bevorzugt ist ferner, daß geringe Mengen an Difluorchlormethan als Treibmittel mitverwendet werden, in der Regel in Mengen von 0,5 - 5 Gew.-Teilen pro 100 Gew.-Teile "Polyolkomponente".

Die Erfindung betrifft auch die Verwendung der erhaltenen Schaumstoffe als Isolationsmaterial für die Bauindustrie.

Für die Herstellung der Polyurethanschaumstoffe werden eingesetzt:

1. Als Ausgangskomponenten Gemische aus 5 bis 49 Gew.-% an Diphenylmethan-diisocyanaten (Summe aus 4,4'-, 2,4'- und 2,2'-Diphenylmethandiisocyanat) und 95 bis 51 Gew.-% an Polyphenyl-polymethylen-polyisocyanaten, Derartige Gemische werden auch als "polymeres Diphenylmethandiisocyanat" oder auch als "rohes MDI" bezeichnet.

Die Herstellung dieser erfindungsgemäß zu verwendenden Polyisocyanate ist an sich bekannt.

2. Als Ausgangskomponenten ferner Verbindungen mit mindestens zwei gegenüber Isocyanaten reaktionsfähigen Wasserstoffatomen und einem Molekulargewicht in der Regel von 350 bis 4.000 ("Polyolkomponente"). Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 350 bis 3.000, vorzugsweise 370 bis 1.200, z. B. mindestens zwei, in der Regel 2 bis 8, vorzugsweise aber 2 bis 4, Hydroxylgruppen aufweisenden Polyester, Polyether, Polythioether, Polyacetale, Polycarbonate und Polyesteramide, wie sie für die Herstellung von homogenen und von zellförmigen Polyurethanen an sich bekannt sind und wie sie z.B. in der DE-OS 2 832 253, Seiten 11-18, beschrieben werden.

3. Gegebenenfalls als Ausgangskomponenten Verbindungen mit mindestens zwei gegenüber Isocyanaten reaktionsfähigen Wasserstoffatomen und einem Molekulargewicht von 32 bis 349 (noch "Polyolkomponente"). Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf, Beispiele hierfür werden in der DE-OS 2 832 253, Seiten 19-20, beschrieben.

4. Wasser in den angegebenen Mengen und gegebenenfalls in geringen Mengen leicht flüchtige organische Substanzen, vorzugsweise Difluorchlormethan, als Treibmittel.

Selbstverständlich widerspricht es nicht der erfindungsgemäßen Lehre, kleine Mengen von ökologisch weniger bedenklichen Halogenverbindungen, wie z.B. Chlordifluormethan zuzusetzen. Gasförmiges Kohlendioxid kann ebenfalls im Treibprozeß mitverwendet werden, z.B. durch Injektion in den Produktstrom auf der Druckseite der Maschinen. Vorteilhaft in ökologischer Hinsicht ist auch die Mitverwendung von anorganischen Flammschutzmitteln, wie Ammoniumpolyphosphat, Aluminiumhydroxid oder Magnesiumhydroxid.

5. Halogenfreie Phosphorverbindungen an sich bekannter Art als Zusatzmittel, z.B. Triphenylphosphit, Trikresyl-, Diphenylkresylphosphat oder Dimethylmethanphosphonat oder Phosphonate gemäß DE-OS 3 430 285.

6. Gegebenenfalls Hilfs- und Zusatzmittel wie

a) Katalysatoren der an sich bekannten Art in der Regel in Mengen von bis zu 5 Gew.-%, bezogen auf die "Polyolkomponente",
b) oberflächenaktive Zusatzstoffe, wie Emulgatoren und Schaumstabilisatoren,
c) Reaktionsverzögerer, z.B: sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß-oder Schlämmkreide.

Diese gegebenenfalls mitzuverwendenden Hilfs- und Zusatzstoffe werden beispielsweise in der DE-OS 2 732 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113, beschrieben.

Durchführung der Erfindung:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121-205, beschrieben.

Bevorzugt ist das Einstufenverfahren.

Selbstverständlich können auch die Polyurethanschaumstoffe nach dem an sich bekannten Doppel-Transportbandverfahren hergestellt werden.

Die Herstellung der Polyurethanschaumstoffe erfolgt erfindungsgemäß bei Kennzahlen in der Regel von 85 bis 150, vorzugsweise von 100 bis 135.

Die erfindungsgemäß erhältlichen Polyurethan-Hartschaumstoffe finden z.B. Anwendung als Dämm-Materialien, insbesondere in der Bauindustrie.

Beispiele

Beispiel 1

Es wurde eine Mischung aus folgenden Komponenten hergestellt (GT = Gewichtsteile):

| | | |
|---|---|---|
| Zucker-propylenoxidpolyether, OH-Zahl 430 Viskosität-3.000 mPa's | 15 | GT |
| Ethylendiaminpropylenoxidpolyether, OH-Zahl 630 | 11 | GT |
| Phthalsäureester mit Diethylenglykol, Sorbit, Propylenglykol, OH-Zahl 400, Funktionalität 2,2 | 34 | GT |
| Glycerin | 5 | GT |
| Diphenylkresylphosphat | 30 | GT |
| Silikonstabilisator B8404 der Goldschmidt AG in Essen | 1 | GT |
| Viskosität (mPa's, 20 °C): [kein Abstand] | 1.250 | |
| Wasser | 4 | GT |
| N,N-Dimethylaminocyclohexan | 1,2 | GT |
| 25 %ige Kaliumacetatlösung in Diethylenglykol | 1,8 | GT |
| Polymeres 4,4′-Diphenylmethandiisocyanat, NCO-Gehalt 30 %, 2-Kern-Anteil 45 % | 159 | GT |

Die Polyolmischung, die Katalysatoren und das Isocyanat wurden jeweils über einzelne Pumpen einer Hennecke-Hochdruckmaschine dosiert und gefördert.

Das Reaktionsgemisch wurde auf einer Hennecke-Doppeltransportbandanlage aufgetragen und schäumte zwischen 2 Papierdeckschichten auf. Die Dicke betrug 4 cm. Es entstand eine feinzellige Schaumstoffplatte mit einer Schaumstoffrohdichte von 36 kg/m$^3$. Der Schaumstoff erfüllt die Klasse B2 nach DIN 4102. Die Wärmeleitfähigkeit betrug 0,028 W/k.m bei 24 °C nach 4 Wochen.

Die freigeschäumte Rohdichte betrug 28 kg/m$^3$.

Derartige Platten können für Dach- oder Wanddämmung verwendet werden.

Vergleichsbeispiel 1

Zu Vergleichszwecken wurde ein Schaumstoff hergestellt, der mit üblichem Trichlorfluormethan getrieben wird.

| | | |
|---|---|---|
| Polyolmischung aus Beispiel 1 | 100 | GT |
| Trichlorfluormethan | 28 | GT |
| N,N-Dimethylaminocyclohexan | 1,2 | GT |
| 25 %ige Kaliumacetatlösung in Diethylenglykol | 1,8 | GT |
| Polymeres Diphenylmethandiisocyanat, NCO-Gehalt 30 % 2-Kern-Anteil 45 % | 91 | GT |

Der Schaumstoff schrumpft und ist für technische Zwecke nicht brauchbar.

Vergleichsbeispiel 2

Zu Vergleichszwecken wurde ein Schaumstoff nach Beispiel 1 hergestellt, mit dem Unterschied, daß als Isocyanatkomponente ein polymeres Diphenylmethandiisocyanat mit 55 % 2-Kern-Anteil eingesetzt wurde.

Der Schaumstoff schrumpft und ist für technische Zwecke nicht brauchbar.

Beispiel 2

Es wurde eine Mischung aus folgenden Komponenten hergestellt:

| | | |
|---|---|---|
| Zuckerpolyether nach Beispiel 1 | 15 | GT |
| Ethylendiaminpolyether nach Beispiel 1 | 11 | GT |
| Phthalsäureester aus Beispiel 1 | 34 | GT |
| Glycerine | 5 | GT |
| Diphenylkresylphosphat | 15 | GT |
| Dimethylmethanphosphonat | 5 | GT |
| N,N-Bis(2-hydroxyethyl)aminomethanphosphonsäurediethylester | 15 | GT |
| 50 %ige wäßrige Lösung des Na-Salzes der sulfatierten Ricinolsäure | 8 | GT |
| Silikonstabilisator L 5420 der Firma UCC | 1 | GT |
| Viskosität (mPa', 20°C): [kein Abstand] | 2.000 | |
| Dimethylcyclohexylamin | 1,2 | GT |
| 25 %ige Kaliumlösung in Diethylenglykol | 1,8 | GT |
| Polymeres Diphenylmethandiisocyanat, NCO-Gehalt 30 % 2-Kern-Anteil 45 % | 177 | GT |

Die Komponenten werden in einem Pappbecher intensiv 10 sec. vermischt und in eine Holzform eingetragen. Nach dem Aushärten des Schaumstoffes wird eine Rohdichte von 28 kg/m³ festgestellt. Der Schaumstoff ist in die Baustoffklasse B2 nach DIN 4102 einzuordnen.

Beispiel 3

Die Ausführung des Beispiels 2 wird wiederholt, nur werden auf 100 Gewichtsteile Polyol 30 Gewichtsteile Aluminiumoxidhydrat zugesetzt.

Die Rohdichte beträgt 32 kg/m³, das Brandverhalten ist weiter verbessert, neben der B2-Klassifizierung wird im Schweizer BVD-Test die Klasse V erreicht.

Beispiel 4

Beispiel 1 wurde wiederholt, wobei die Menge an Wasser auf 5 Tew.-Teile und die Isocyanatmenge auf 175 Gew.-Teile erhöht wurde.

Die Plattenrohdichte betrug 32 kg/m³ und der Wert für die Wärmeleitfähigkeit nach 4 Wochen betrug 0,025 w/°k.m bei 24°C.

Beispiel 5

Beispiel 1 wurde wiederholt, wobei zusätzlich 1 Gew.-Teil Difluorchlormethan verwendet wurde. Die Rohdichte in der Platte betrug 34 kg/m³.

**Patentansprüche**

1. Verfahren zur Herstellung von Polyurethan-Hartschaumstoffen durch Umsetzung von Polyisocyanaten mit mindestens zwei gegenüber Isocyanaten aktive Wasserstoffatome aufweisenden Verbindungen vom Molekulargewicht 350 bis 4.000 in Gegenwart von Treibmitteln und in Gegenwart von organischen, nichteinbaubaren phosphorhaltigen Zusatzstoffen, gegebenenfalls in Gegenwart von Katalysatoren, von Verbindungen mit mindestens zwei gegenüber Isocyanaten reaktionsfähigen Wasserstoffatomen und einem Molekulargewicht von 32 bis 349, sowie an sich bekannten oberflächenaktiven und flammhemmenden Zusatzstoffen und weiteren, an sich bekannten Hilfsmitteln, dadurch gekennzeichnet, daß als

a) Polyisocyanate Gemische aus 5 bis 49 Gew.-% an Diphenylmethandiisocyanaten und 95 bis 51 Gew.-% an Polyphenyl-polymethylen-polyisocyanaten, als
b) Treibmittel Wasser in einer Menge von 2 bis 5 Gew.-Teilen, vorzugweise von 2,5 bis 4,5 Gew.-Teilen, bezogen auf 100 Gew.-Teile der mindestens zwei aktive Wasserstoffatome aufweisenden Verbindungen vom Molekulargewicht 350 bis 4000, und als

c) organische, nichteinbaubare phosphorhaltige Zusatzstoffe halogenfreie Phosphorverbindungen

verwendet werden.

2. Verfahren gemäß Anspruch 1, dadurch gekennzeichnet, daß anorganische Flammschutzmittel mitverwendet werden.

3. Verfahren gemäß Ansprüchen 1 und 2, dadurch gekennzeichnet, daß als Treibmittel Difluorchlormethan mitverwendet wird.

4. Verwendung der nach Ansprüchen 1 bis 3 erhaltenen Schaumstoffe als Isolationsmaterial für die Bauindustrie.

## Claims

1. A process for the preparation of polyurethane rigid foams by the reaction of polyisocyanates with compounds in the molecular weight range of from 350 to 4 000 containing at least two isocyanate reactive hydrogen atoms in the presence of blowing agents and in the presence of organic phosphorus-containing additives which are not incorporable, optionally in the presence of catalysts, of compounds having at least two isocyanate reactive hydrogen atoms and a molecular weight of from 32 to 349 and surface active and flame retardant additives known per se and other known auxiliary substances, characterised in that

a) the polyisocyanates used are mixtures of from 5 to 49% by weight of diphenylmethane diisocyanates and from 95 to 51% by weight of polyphenyl-polymethylene polyisocyanates,
b) the blowing agent used is water in a quantity of from 2 to 5 parts by weight, preferably from 2.5 to 4.5 parts by weight, based on 100 parts by weight of the compounds in the molecular weight range of from 350 to 4 000 having at least two active hydrogen atoms, and
c) the organic, non-incorporable, phosphorus-containing additives used are halogen-free phosphorus compounds.

2. The process according to claim 1, characterised in that inorganic flame retardants are used.

3. Process according to claims 1 and 2, characterised in that difluorochloromethane is used as blowing agent.

4. Use of the foams obtained according to claims 1 to 3 as insulating material for the building industry.

## Revendications

1. Procédé pour fabriquer des mousses dures de polyuréthanne en faisant réagir des polyisocyanates avec des composés présentant au moins deux atomes d'hydrogène actifs vis-à-vis des isocyanates et ayant une masse moléculaire de 350 à 4.000, en présence d'agents moussants et en présence d'additifs organiques phosphorés non incorporables, éventuellement en présence de catalyseurs, de composés possédant au moins deux atomes d'hydrogène réactifs vis-à-vis des isocyanates et ayant une masse moléculaire de 32 à 349, ainsi que d'additifs tensio-actifs et pare-flamme et d'autres adjuvants connus en soi, caractérisé en ce qu'on emploie
a) comme polyisocyanates: des mélanges de 5 à 49% en poids de diphénylméthane-diisocyanates et 95 à 51% en poids de polyphényl-polyméthylène-polyisocyanates,
b) comme agent moussant: de l'eau à raison de 2 à 5 parties en poids, de préférence 2,5 à 4,5 parties en poids, par rapport à 100 parties en poids des composés présentant au moins deux atomes d'hydrogène actifs et ayant une masse moléculaire de 350 à 4000, et
c) comme additifs organiques phosphorés non incorporables: des composés phosphorés ne contenant pas d'halogènes.

2. Procédé selon la revendication 1, caractérisé en ce qu'on introduit également des agents pare-flamme inorganiques.

3.  Procédé selon les revendications 1 et 2, caractérisé en ce qu'on utilise comme agent moussant du difluorochlorométhane.

4.  Utilisation des mousses obtenues selon les revendications 1 à 3 comme matériaux isolants pour l'industrie du bâtiment.